# EUROPÄISCHE PATENTSCHRIFT

(11) **EP 3 029 346 B1**
(45) Veröffentlichungstag und Bekanntmachung des Hinweises auf die Patenterteilung: **28.08.2019**
(21) Anmeldenummer: 15193933.7
(22) Anmeldetag: 10.11.2015
(51) Int. Cl.: F16C 35/04, B30B 3/04, F16C 35/06, F16C 13/02, F16C 19/18, F16C 19/38

(54) **ZWEIWALZEN-ROLLENPRESSE MIT AXIALLAGERKONSTRUKTION**
TWO ROLLER ROLLER PRESS WITH AXIAL BEARING STRUCTURE
PRESSE À DEUX ROULEAUX PRÉSENTANT DES PALIERS AXIAUX

(30) Priorität: 03.12.2014 DE 102014224734
(43) Veröffentlichungstag der Anmeldung: 08.06.2016
(73) Patentinhaber: Takraf GmbH, 04347 Leipzig (DE)
(72) Erfinder: Frangenberg, Meinhard, 51515 Kürten-Engeldorf (DE)
(74) Vertreter: Kailuweit & Uhlemann Patentanwälte Partnerschaft mbB

(56) Entgegenhaltungen:
- WO-A1-03/022471
- DE-A1- 3 728 389
- DE-U1- 8 608 228
- GB-A- 2 188 684
- JP-A- 2000 237 807

## Beschreibung

Gegenstand der vorliegenden Erfindung ist eine Zweiwalzen-Rollenpressen mit Axiallagerkonstruktion, wobei die Rollen Wellenzapfen aufweisen. Mindestens einer der Wellenzapfen jeder Rolle weist ein Axiallager auf, das axial wirkende Kräfte aufnimmt und so eine axiale Verschiebung der Rolle verhindert. Die Rollen weisen neben der axialen Lagerung auch eine Radiallagerung auf.

Häufig ist eine der beiden Rollen von Zweiwalzen-Rollenpressen als Festrolle ausgebildet, deren Lager sich direkt am Maschinenrahmen abstützt, während die zweite (lose Rolle) kraftausübende Elemente (Hydraulikzylinder, Federkonstruktionen) zwischen den Lagern und dem Maschinengestell aufweist. Diese kraftausübenden Elemente bringen die Presskräfte auf und ermöglichten ein Ausweichen der Losrolle, falls die Gegenkraft des Mahlgutes die maximale Anpresskraft übersteigt. Bei einem nicht parallelen Rollenspalt kommt es bei der Losrolle zu einer Schiefstellung und somit zu axialen Kräften, die von mindestens einem Axiallager aufgenommen werden müssen, um eine Verschiebung der Rolle zu verhindern.

Im Stand der Technik werden daher Pendelrollenlager eingesetzt, die neben radialen auch axiale Belastungen aufnehmen können. Andere Ausführungsformen im Stand der Technik sehen vor, statt Pendelrollenlager mehrreihige Zylinderrollenlager einzusetzen, die jedoch keine axialen Kräfte aufnehmen können. Dazu werden diese Zylinderrollenlager um axiale Abstützungen ergänzt, die die Axialkräfte aufnehmen. Als Abstützung sind dabei insbesondere Axiallager geeignet. Die klassische Rollenlagerung besteht somit aus einem Festlager, einer Kombination aus Zylinderrollenlager und Axialpendelrollenlager, auf der einen Seite der Rolle und einem Zylinderrollenlager als Loslager, vorzugsweise auf der Antriebsseite der Rolle.

Die Befestigung der Axiallager auf den Wellenzapfen erfolgt vorzugsweise mittels Aufschrumpfens. Dazu werden die Axiallager erhitzt und erhalten durch die thermische Schrumpfung beim Abkühlen einen festen Sitz auf den Wellenzapfen.

Diese Konstruktionsform hat sich jedoch als nachteilig erwiesen, da die Standzeiten und die daraus resultierenden erforderlichen Wechselintervalle der Rollenoberflächen deutlich kleiner als die Wechselintervalle der Axiallager sind. D.h. bei jeder Demontage der Rollenlagerung infolge einer Rollenoberflächenwartung bzw. eines Rollenaustauschs muss daher das Axiallager aufwendig von dessen Wellenzapfen abgezogen und auf dem der Austauschrolle wieder aufgezogen werden. Diesem Problem begegnet die DE 101 36 201 A1, die vorschlägt, das Axiallager nicht auf die Welle, sondern auf den ringkappenförmigen Abschlussdeckel des Lagers aufzuschrumpfen. Diese Montageeinheit wird dann mit geringem Spiel bei montiertem "Axiallagerdeckel außen" auf den Wellenzapfen aufgeschoben und mit diesem axial verschraubt. Auf der Außenseite des Abschlussdeckels ist ein mitrotierender Laufring vorgesehen, der gegen nicht mitrotierende Dichtungsringe läuft und so die Abdichtung der Rollenlagerung bewirkt.

Praktische Erfahrungen haben gezeigt, dass diese Axiallageraufnahmekonstruktion nicht den Anforderungen entspricht und es immer wieder zu Problemen mit Kühlwasserundichtigkeiten an der Flachdichtung zwischen der Montageeinheit und der Verschraubungsebene am Wellenzapfen kommt. Weiterhin problematisch ist, dass in der Praxis der Axiallagerdeckel außen mit seiner in der Breite ausladenden, ringförmigen Axiallagergehäuseausformung als Gussteil ausgeführt wurde (kostengünstiger als ein Schweißteil), was zu einer aufwendigen Produktion mit relativ hohen Kosten geführt hat. Auch die Montage bzw. Demontage des Axiallagers ist aufgrund der Vielzahl an Passungstoleranzen komplizierter als wünschenswert.

In einer weiteren Ausführung aus dem Stand der Technik, wie ihn die WO 03/022471 zeigt, sind Axiallager und Laufring konstruktionsbedingt stramm auf die Welle geschrumpft. Der einteilige "Axiallagerdeckel außen" aus Guss wird dabei vorher montiert. Zur Demontage, z.B. bei einem Rollenwechsel, müssen die paarweise auf der Welle aufgeschrumpften Axiallager mit einer eigens dafür herzustellenden Abziehvorrichtung, zusammen mit dem "Axiallagerdeckel außen", ohne geeignete Vorwärmung (Axiallager sitzen dreiseitig eingehaust im Axiallagerdeckel außen) abgezogen werden. Aufgrund des strammen Sitzes der Teile und der Schwierigkeit bzw. Unmöglichkeit die Axiallager zu erwärmen, ist diese Prozedur zeitaufwendig.

Es stellt sich somit die Aufgabe, die Nachteile des Standes der Technik zu überwinden und eine Zweiwalzen-Rollenpresse mit einer Axiallagerkonstruktion vorzuschlagen die neben einer leichten Montierbarkeit auch das Dichtungsproblem löst und weltweit leicht zu beschaffen bzw. herzustellen ist.

Diese Aufgabenstellung wird mit einer Konstruktion nach Anspruch 1 gelöst. Vorteilhafte Ausgestaltungen sind in den rückbezogenen Unteransprüchen offenbart.

Erfindungsgemäß wird eine Zweiwalzen-Rollenpresse vorgesehen, bei der Axiallagergehäuse und ein Lagerdeckel lösbar zu einer Einheit verbunden sind. Bevorzugt erfolgt diese Verbindung durch verschrauben. Die restliche Ausgestaltung der Zweiwalzen-Rollenpresse entspricht bekannten Konstruktionen aus dem Stand der Technik.

In einer Ausführung sind der Axiallagerdeckel außen und das Axiallagergehäuse aus Blech gefertigt.

Im Sinne dieser Anmeldung bezeichnet der Axiallagerdeckel das Bauteil der Rolle, dass das Axiallager in Richtung der Rollenmitte begrenzt. Häufig ist dies der Deckel, der die Radiallager verdeckt. Der Lagerdeckel bezeichnet im Sinne dieser Anmeldung das Bauteil, welches das Axiallager in Richtung des Wellenendes begrenzt und erfindungsgemäß mit dem Axiallagergehäuse verschraubt wird.

Das Axiallager sitzt im Gegensatz zur DE 101 36 201 A1 nicht auf dem ringkappenförmigen Abschlussdeckel, sondern unmittelbar auf der Welle. Die Befestigung erfolgt nach bekanntem Vorgehen mittels Aufschrumpfens des Axiallagers auf den Wellenzapfen. Das Axiallager sitzt somit direkt auf dem Wellenzapfen auf und nicht auf dem ringkappenförmigen Abschlussdeckel. Der Axiallagerdeckel außen und der lösbar befestigte (geschraubte) Gehäusering für die Aufnahme der äußeren Axiallagerbauteile können, aufgrund des einfachen geometrischen Aufbaus, aus Stahlblech gefertigt werden und sind somit vorteilhaft weltweit beschaffbar und herstellbar.

In der erfindungsgemäßen Lösung werden die vorzugsweise ringförmigen Axiallagergehäuse am Axiallagerdeckel außen lösbar befestigt, vorzugsweise verschraubt.

Die erfindungsgemäße Konstruktion reduziert vorteilhaft die Anzahl der Bauteile. Sie ermöglicht einen freien Zugang zum Wellensitz bei demontiertem ringförmigen Axiallagergehäuse und montiertem Axiallagerdeckel außen, was das thermische Aufschrumpfen des Axiallagers bei Montage ermöglicht. Zur Demontage ist das Axiallager nach Abschrauben des Axiallagergehäuseringes frei zugänglich, was die Erwärmung des Axiallagers zum Abziehen von der Welle ermöglicht. Vorteilhaft kommen keine kostenintensiven gegossenen Axiallagerdeckel zum Einsatz sondern einfache Blechkonstruktionen, die leichter herzustellen und überall beschafft bzw. gefertigt werden können. Besonders vorteilhaft ist, dass das Axiallager kontrolliert werden kann (Verschleißzustand), ohne dieses demontieren zu müssen. Die Trennstelle innerhalb der Lagerung zwischen den Medien Schmierstoff und Kühlwasser und deren problematische Abdichtung gegeneinander ist bei der erfindungsgemäßen Konstruktion eliminiert. Dies gelingt insbesondere dadurch, dass auf die Flachdichtung verzichtet wird, die komprimierbare ist und aufsummierte Toleranzen ausgleichen soll, was eine problematische Doppelfunktion dieser Flachdichtung darstellt.

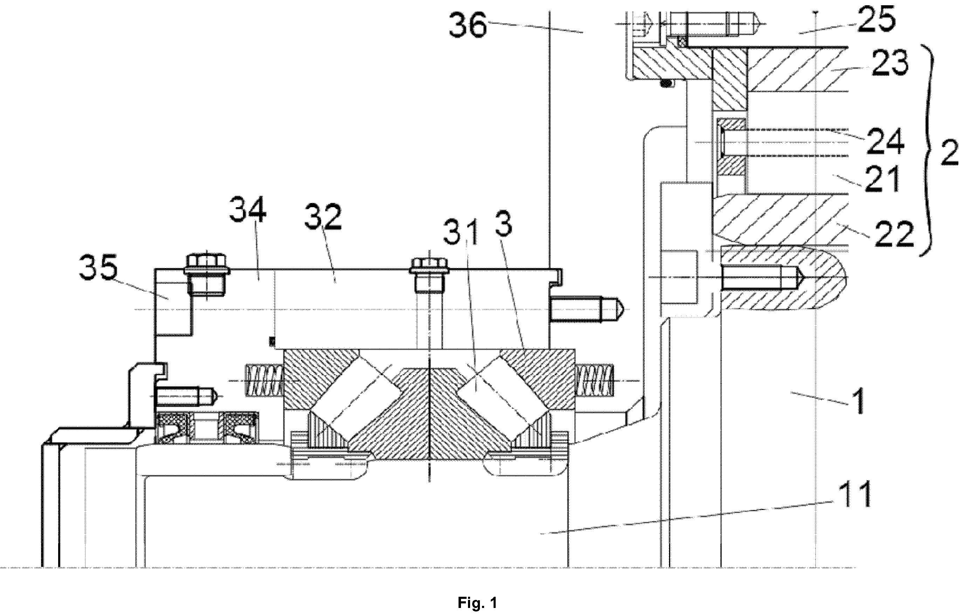

**Fig. 1** zeigt schematisch einen Schnitt durch die Axiallagerkonstruktion der erfindungsgemäßen Zweiwalzen-Rollenpresse. Dargestellt ist lediglich der Schnitt bis zur Rotationsachse der Welle.

Das folgende Ausführungsbeispiel beschreibt eine bevorzugte Ausführungsform der Axiallagerkonstruktion der erfindungsgemäßen Zweiwalzen-Rollenpresse, ohne jedoch die Erfindung auf diese zu beschränken.

Die Rollenpressenwalze 1 ist über ihren Wellenzapfen 11 in einem mehrzeiligen Zylinderrollenlager 2 mit Lagerinnenring 22, Lageraußenring 23, Wälzkörpern 21, Bolzenkäfig 24 und weiteren konstruktiven Elementen nach dem Stand der Technik gelagert. Das Wälzlager 2 ist mit seinem Außenring 23 im Lagergehäuse 25 angeordnet, welches seinerseits vom Maschinenrahmen der Hochdruck-Rollenpresse (Zweiwalzen-Rollenpresse) aufgenommen wird.

Die Axiallagerkonstruktion weist zwei Axiallager 3, vorzugsweise Axialpendelrollenlager in X-Anordnung, mit Axiallagerrollen 31, einen Axiallagergehäusering 32, einen Axiallagerdeckel 36 und einen Lagerdeckel 34 auf. Das Axiallager 3 ist auf den Wellenzapfen aufgeschrumpft. In Umfangsrichtung ist das Axiallager 3 von dem ringförmigen Axiallagergehäuse 32 umgeben. Dieses Axiallagergehäuse 32 besteht aus Stahlblech. Der Lagerdeckel 34 deckt das Axiallager in Richtung Wellenzapfenende ab und verschließt die gesamte Konstruktion gegen Umwelteinflüsse. Die Axiallageraußenseite des Festlagers beinhaltet unter anderem den Axiallagerdeckel außen 36 und den Axiallagergehäusering 32, der über den Lagerdeckel 34 mit Schrauben am Axiallagerdeckel außen 36 befestigt ist. Diese Axiallagerkonstruktion bildet eine Umhüllung für das Wellenende und die Axiallager 3. Besonders vorteilhaft müssen nur die Befestigungsschrauben 35 gelöst werden, um den Lagerdeckel 34 und den Gehäusering 32 abnehmen und das Axiallager 3 inspizieren zu können.

### Bezugszeichenliste

- 1: Rollenpressenwalze
- 11: Wellenzapfen
- 2: Zylinderrollenlager
- 21: Wälzkörper
- 22: Lagerinnenring
- 23: Lageraußenring
- 24: Bolzenkäfig
- 25: Lagergehäuse
- 3: Axiallager
- 31: Axiallagerrollen
- 32: Axiallagergehäusering
- 34: Lagerdeckel
- 35: gemeinsame Verschraubung von Lagerdeckel und Axiallagergehäusering
- 36: Axiallagerdeckel außen

## Patentansprüche

1. Zweiwalzen-Rollenpresse aufweisend ein Maschinengestell mit zwei Walzen, die jeweils an ihrem axialen Enden Wellenzapfen zur Lagerung in einer von einem Lagergehäuse umgebenen Lagerkonstruktion aufweisen, die in dem Maschinengestell befestigt sind, wobei mindestens eine der Walzen an einem oder beiden Wellenzapfen (11) in einer Axiallagerkonstruktion gelagert ist, **dadurch gekennzeichnet, dass** die Axiallagerkonstruktion ein Axiallager (3), einen Axiallagergehäusering (32), einen Axiallagerdeckel außen (36) und einen Lagerdeckel (34) aufweist, das Axiallager (3) auf einen Wellenzapfen (11) aufgeschrumpft ist, das Axiallager (3) in Umfangsrichtung von dem ringförmigen Axiallagergehäusering (32) umgeben ist, wobei der Axiallagergehäusering (32) bei montiertem Axiallager (3) entfernbar ist, sodass das Axiallager (3) für ein Erwärmen zum thermischen Aufschrumpfen oder zum Abziehen von dem Wellenzapfen (11) frei zugänglich ist, der Axiallagergehäusering (32) und der Lagerdeckel (34) lösbar zu einer Einheit verbunden sind, die lösbar am Axiallagerdeckel außen (36) befestigt ist, der seinerseits lösbar am Lagergehäuse befestigt ist.

2. Zweiwalzen-Rollenpresse nach Anspruch 1, **dadurch gekennzeichnet, dass** der Axiallagerdeckel außen (36) der Axiallagerkonstruktion aus Blech gefertigt ist.

3. Zweiwalzen-Rollenpresse nach Anspruch 1 oder 2, **dadurch gekennzeichnet, dass** das Axiallagergehäusering (32) der Axiallagerkonstruktion aus einem Blechring gefertigt ist.

4. Zweiwalzen-Rollenpresse nach einem der vorhergehenden Ansprüche, **dadurch gekennzeichnet, dass** die lösbare Verbindung von Axiallagergehäusering (32) und Lagerdeckel (34) zu einer Einheit mittels Verschraubens realisiert ist.

5. Zweiwalzen-Rollenpresse nach einem der vorhergehenden Ansprüche, **dadurch gekennzeichnet, dass** die lösbare Verbindung der Einheit von Axiallagergehäusering (32) und Lagerdeckel (34) mit dem Axiallagerdeckel außen (36) durch Verschrauben realisiert wird.

6. Zweiwalzen-Rollenpresse nach einem der vorhergehenden Ansprüche, **dadurch gekennzeichnet, dass** die lösbare Verbindung von Axiallagergehäusering (32) und Lagerdeckel (34) zu einer Einheit und die lösbare Verbindung der Einheit von Axiallagergehäusering (32) und Lagerdeckel (34) mit dem Axiallagerdeckel außen (36) durch gemeinsame Schrauben realisiert werden, die alle drei Bauteile miteinander verbinden.

## Claims

1. Two-roller roll press having a machine frame with two rollers, which have shaft journals at their respective axial ends for mounting in a bearing construction, which said shaft journals are fastened in the machine frame, wherein at least one of the rollers is mounted at one or both shaft journals (11) in a thrust bearing construction **characterized in that**, the thrust bearing construction comprises a thrust bearing (3), a thrust bearing housing ring (32), an outer thrust bearing cap (36) and a bearing cap (34), the thrust bearing (3) is shrunk onto a shaft journal (11), thrust bearing (3) is surrounded by the ring-shaped thrust bearing housing (32) in the circumferential direction, wherein the trust bearing housing ring (32) can be removed while the trust bearing (3) is still mounted, wherein the trust bearing (3) is free accessible for heat shrinking or removing onto shaft journal (11) with the ring-shaped thrust bearing housing removed and the outer thrust bearing cap removed, which makes it possible to heat shrink the thrust bearing during mounting, wherein thrust bearing housing ring (32) and the bearing cap (34) are detachably connected into one unit, which is detachably fastened to the outer thrust bearing cap (36), which is in turn detachably fastened to the bearing housing.

2. The two-roller roll press in accordance with claim 1, **characterized in that** the outer thrust bearing cap (36) of the thrust bearing construction is manufactured from sheet metal.

3. The two-roller roll press in accordance with claim 1, **characterized in that** the thrust bearing housing ring (32) of the thrust bearing construction is manufactured from a sheet metal ring.

4. The two-roller roll press in accordance with any one of the preceding claims, **characterized in that** the detachable connection of the thrust bearing housing ring (32) and the bearing cap (34) into one unit is brought about by the screw connection.

5. The two-roller roll press in accordance with any one of the preceding claims, **characterized in that** by the detachable screw connection the thrust bearing housing ring (32) and the bearing cap (34) are connected to the outer thrust bearing cap (36).

6. Two-roller roll press in accordance with one of the preceding claims, **characterized in that** the detachable connection of the thrust bearing housing ring (32) and bearing cap (34) into one unit and the detachable connection of the unit comprising the thrust bearing housing ring (32) and the bearing cap (34) to the outer thrust bearing cap (36) are brought about by common screws, which connect all three components to one another.

## Revendications

1. Presse à deux rouleaux présentant un bâti de machine comportant deux rouleaux qui présentent chacun à ses extrémités axiales des tourillons d'arbre destinés à être montés dans une construction de palier entourée d'un boîtier de palier, lesquels tourillons d'arbre sont fixés dans le bâti de machine, au moins l'un des rouleaux étant monté sur l'un ou les deux tourillons d'arbre (11) dans une construction de palier axiale, **caractérisée en ce que** la construction de palier axiale présente un palier axial (3), un anneau de boîtier de palier axial (32), un couvercle de palier axial externe (36) et un couvercle de palier (34), le palier axial (3) étant rétracté sur un tourillon d'arbre (11), le palier axial (3) étant entouré dans la direction circonférentielle par l'anneau de boîtier de palier axial (32) circulaire, l'anneau de boîtier de palier axial (32) étant amovible lorsque le palier axial (3) est monté, de sorte que le palier axial (3) soit librement accessible pour un chauffage en vue d'une rétraction thermique ou d'une extraction du tourillon d'arbre (11), l'anneau de boîtier de palier axial (32) et le couvercle de palier (34) étant reliés de manière amovible à une unité qui est fixée de manière amovible au couvercle de palier axial externe (36), lequel couvercle de palier axial est, à son tour, fixé de manière amovible au boîtier de palier.

2. Presse à deux rouleaux selon la revendication 1, **caractérisée en ce que** le couvercle de palier axial externe (36) de la construction de palier axiale est réalisé en tôle.

3. Presse à deux rouleaux selon la revendication 1 ou 2, **caractérisée en ce que** l'anneau de boîtier de palier axial (32) de la construction de palier axiale est constitué d'un anneau de tôle.

4. Presse à deux rouleaux selon l'une des revendications précédentes, **caractérisée en ce que** la liaison amovible de l'anneau de boîtier de palier axial (32) et du couvercle de palier (34) à une unité est réalisée par vissage.

5. Presse à deux rouleaux selon l'une des revendications précédentes, **caractérisée en ce que** la liaison amovible de l'unité d'anneau de boîtier de palier axial (32) et du couvercle de palier (34) avec le couvercle de palier axial externe (36) est réalisée par vissage.

6. Presse à deux rouleaux selon l'une des revendications précédentes, **caractérisée en ce que** la liaison amovible de l'anneau de boîtier de palier axial (32) et du couvercle de palier (34) à une unité et la liaison amovible de l'unité d'anneau de boîtier de palier axial (32) et du couvercle de palier (34) avec le couvercle de palier axial externe (36) sont réalisées par des vis communes reliant les trois composants.
